# EUROPEAN PATENT SPECIFICATION

(11) **EP 2 223 606 B1**
(45) Date of publication and mention of the grant of the patent: **16.04.2014**
(21) Application number: 10153982.3
(22) Date of filing: 18.02.2010
(51) Int. Cl.: A23G 1/00, A23G 1/54, A23G 1/50, B65D 75/58

(54) **Consumption package and method for producing chocolate products in such package**
Verfahren zur Herstellung von Schokolade und Verpackung für Schokoladeprodukte
Emballage pour des produits de chocolat et procédé pour la fabrication

(30) Priority: 26.02.2009 BE 200900114
(43) Date of publication of application: 01.09.2010
(73) Proprietor: Pralibel NV, 8570 Vichte (BE)
(72) Inventor: Sulmon, Paul, 8540 Deerlijk (BE)
(74) Representative: Ostyn, Frans

(56) References cited:
- EP-A- 1 002 464
- WO-A-2004/080194
- WO-A2-2008/029129
- CH-A5- 670 436
- DE-A1- 19 830 258
- DE-U- 20 214 808
- FR-A- 2 102 267
- GB-A- 1 049 959
- GB-A- 2 302 529
- GB-A- 2 335 882
- JP-B- 49 017 580
- US-A- 2 796 033
- US-A- 4 384 644
- US-A1- 2003 008 041

## Description

This invention relates to a method for producing chocolate products in an at least partially transparent consumption package according to the preamble of claim 1. This invention relates in particular to a method for producing pralines.

Pralines, also referred to as chocolates, are generally known and consist of a filling covered with a layer of chocolate. The pralines can be produced by dipping the filling into melted chocolate. This can be performed both manually and automatically.

Pralines can also be produced in moulds. Firstly, a layer of melted chocolate is poured into these moulds; the layer of chocolate sticks to the wall of the mould. After firming-up (hardening of the melted chocolate), the chocolate casing formed is filled with a filling and subsequently scaled over with a further layer of chocolate.

The pralines thus formed are subsequently packaged. This can be carried out in various ways. The most common manner of packaging is that in which a number of pralines are packaged in a (decorated or non-decorated) box. However, pralines can also be packaged in other ways, such as for example in a dish or shell made of chocolate.

GB 2 335 882 discloses a process for making a shelled confectionery product, e.g. a chocolate-shelled biscuit, comprising: thermoforming a plurality of cavities, each having a closed bottom, in a sheet of plastic material, charging each of the cavities with a predetermined amount of a flowable edible material, such as chocolate, applying a cooling plunger to the edible material in each cavity to cause it to flow and fill the space between the plunger and the cavity, allowing the edible material to assume a temperature such that it forms a substantially self-supporting shell, withdrawing the cooling plunger therefrom, charging the shell with further consumable material, and separating the filled cavities from the sheet of plastics material.

GB 2 302 529 describes a method of preparing packaged food. The food is prepared in a container with a closed bottom of plastic material.

The object of this invention is to provide an alternative method for producing chocolate products.

The object of the invention is achieved by providing a method for producing chocolate products in an at least partially transparent consumption package as described in the preamble of claim 1, the method including the following steps:
a) supplying the consumption package which is open at both the top and the bottom, in a plate-shaped holder comprising a number of receptacles which are positioned next to one another and in each of which a consumption package can be placed;
b) filling the supplied consumption package with a first chocolate layer;
c) applying a following chocolate layer.

The innovative aspect of this method consists in the fact that the chocolate products are produced directly in a see-through consumption package, allowing the consumer of the product to directly view the appearance and construction of the presented chocolate product and enabling the consumer to open this package in a convenient, simple and rapid manner.

Preferably, the first and following chocolate layers are different. Producing the chocolate products via the above-described method forms a multilayered chocolate product which is already provided in a transparent (see-through) consumption package. This enables the consumer of the chocolate product to clearly ascertain the composition and construction of the product to be consumed. In addition, producing a chocolate product in this way allows various flavours and/or colours to be combined in one and the same chocolate product.

In a more preferred method in accordance with the invention, steps (b) and (c) are repeated as many times as necessary to obtain a desired multilayered chocolate product. In an alternative embodiment of the method according to the invention, the first and following chocolate layers (in particular a second chocolate layer) are applied at the same time.

In particular, a filling is applied between two chocolate layers. The applied filling is preferably a mixture of various ingredients which are used as standard in the baking, patisserie and chocolate sectors. Examples of these include butter creams, liquid creams, pralinés, ganaches, marzipan products, fruit fillings, caramel-based filling, truffles or yoghurt fillings.

In accordance with a preferred method, the last applied chocolate layer forms a cover layer.

According to a particular method in accordance with the invention, the cover layer is provided with a decoration layer and/or decoration element. Possible decoration layers and/or decoration elements are: chocolate products, sugar products, nuts, spices, edible plants or flowers, imprints (such as for example pictures, letters, logos) applied using edible ink, fruits or fruit products. The applied decoration layer and/or decoration elements can also be a mixture of various ingredients which are applied to the cover layer after mixing or preparation.

The aforementioned consumption package is open at the bottom and at the top. A consumption package of this type is supplied in particular in a holder provided to receive at least one consumption package. The aforementioned holder is preferably made of a plastic sheet material which is food-safe and usually comprises a number of receptacles in each of which a consumption package can be placed. It is obvious that the holder can also be used in a consumption package which is opened only at the top.

In order to further clarify the properties of this invention and in order to indicate additional advantages and special features thereof, a more detailed description of the method and the consumption package according to the invention will now be given. It will be clear that nothing in the subsequent description may be interpreted as limiting the scope of protection of this invention as applied for in the claims.

This description refers by means of reference numerals to the appended drawings, in which:
- *Figure 1* *shows step-by-step how a chocolate product is formed in accordance with the method according to the invention;*
- *Figure 2* *shows a number of possible first embodiments of the consumption package in accordance with the invention; and*
- *Figure 3* *shows a number of possible second embodiments of the consumption package in accordance with the invention.*

This invention relates to a method for producing chocolate products (1), such as for example pralines, chocolates, etc., the chocolate product (1) being produced in an at least partially transparent consumption package (2). The food package (2) is food-safe and preferably made of a plastics material, such as for example transparent PET or another plastics material which is food-safe.

Producing the chocolate product directly in a see-through consumption package (2) makes the product attractive to a consumer because he can now see the chocolate product.

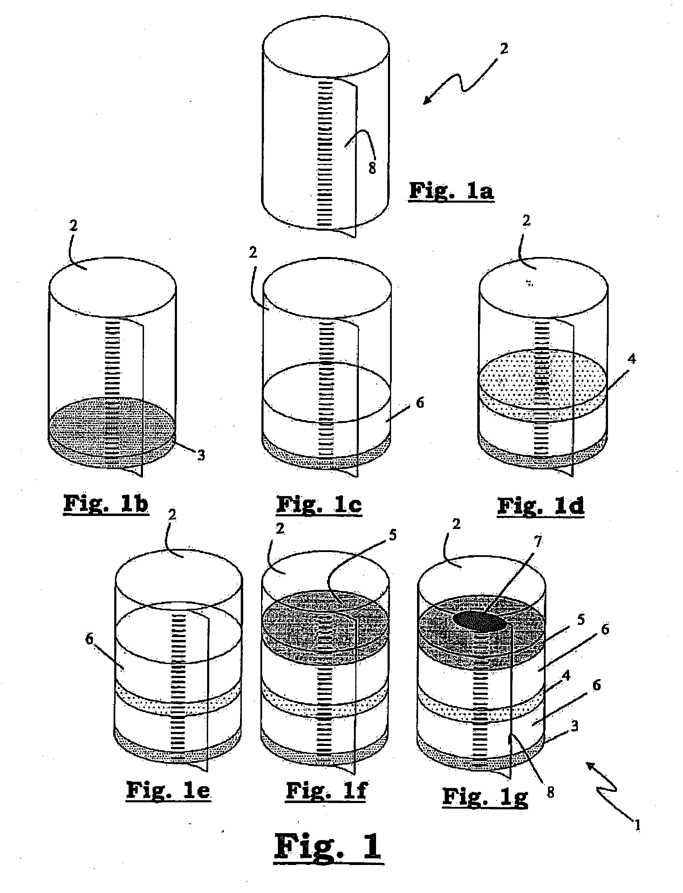

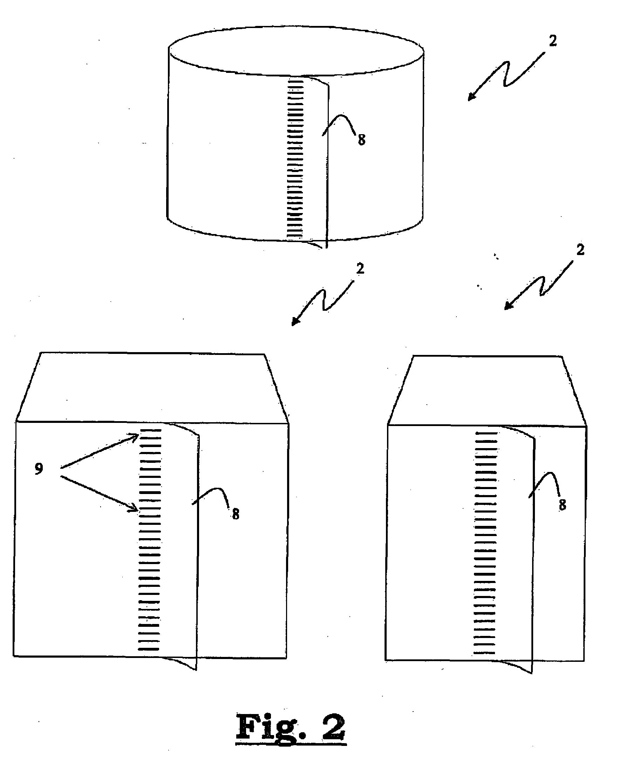

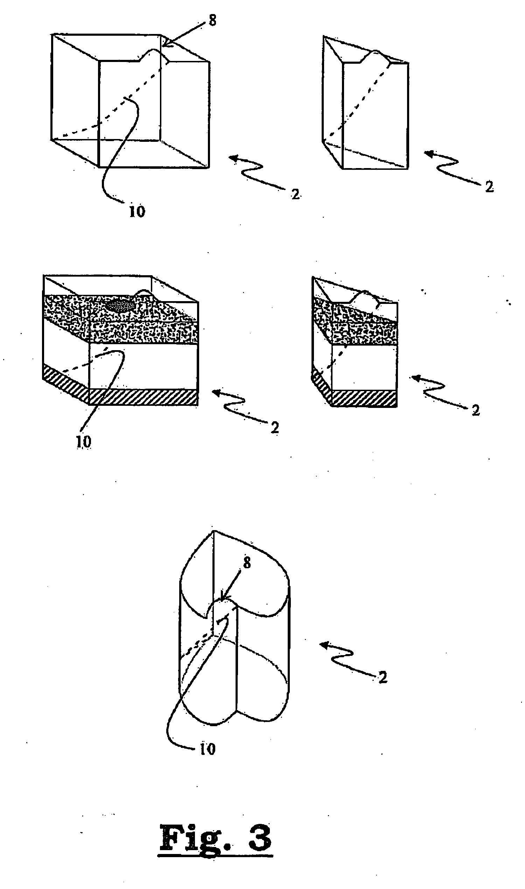

As is apparent from Figures 2 and 3, the consumption package (2) can assume various shapes. The most commonly used shapes are round (tubular), square, quadrangular, triangular and elliptical. It is however obvious that shapes differing therefrom are also possible. As may be seen from Figures 1 and 2, the consumption package (2) comprises in a first preferred embodiment a lip (8) extending over almost the entire length (height) of the package (2). The lip (8) forms part of the packaging material from which the consumption package (2) is made, and is connected to the packaging material via a number of connecting points (9) positioned at a certain distance from one another. The aforementioned connecting points (9) also extend over almost the entire length (height) of the consumption package (2). The lip (8) makes it easy for the consumer to remove the consumption package (2) in a simple manner. The consumption package (2) can be removed by pulling on the lip (8); as a result, the connection is broken at the level of the connecting points (9) and the consumption package (2) of the chocolate product can be removed.

In a second preferred embodiment of the consumption package (2) and as depicted in Figure 3, the lip does not extend over almost the entire length (height) of the package (2); instead, a lip (8), which is connected to a tear line (perforated line) (10) extending over at least a part of the surface of the consumption package (2), is provided merely in certain areas. The lip (8) is preferably provided on the outer circumference, at the level of the top, of the consumption package (2) and may be regarded as a protruding lip. The tear line (10) preferably extends over the entire height of the package. This consumption package (8) can be removed (opened) by pulling on the lip (8); this will cause the tear line to tear and allow the chocolate product to be removed from the package.

On the one hand, the consumption package (2) can be opened at both its bottom and its top; on the other hand, it can be opened just at its top. However, in both embodiments, the top of the package is regarded as being the filling the opening along which the package is filled with inter alia chocolate. The length (height) of the consumption package (2) is in principle not limited, but is preferably between 1 and 8 cm, and is preferably 3 cm.

The consumption package (2) is preferably made of an edible material such as a wheat or soya-based material, for example.

The method in accordance with the invention will be discussed hereinafter step-by-step with reference to Figure 1, wherein a consumption package (2) which is open at both the top and the bottom will be filled. Initially, an empty consumption package (2) is to be provided (see Fig. la). Since the consumption package (2) is opened at both the bottom and the top, the consumption package (2) is provided in a preferably plate-shaped holder (not shown in the figures). A holder of this type comprises a number of receptacles which are positioned next to one another and in each of which a consumption package (2) can be placed. When using a holder of this type, it is important that the contact surface between the consumption package (2) and the holder is food-safe.

Subsequently, a first chocolate layer (3) (see Fig. lb), in particular the bottom layer (3), is applied in the consumption package (2). The bottom layer can be white chocolate, milk chocolate, chocolate fondant or imitation chocolate. Mixtures of the above-mentioned chocolates with other ingredients are also possible. This chocolate layer (3) forms, as it were, the base of the chocolate product (1). When a consumption package (2) having a sealed bottom is opted for, it is not necessary (although it is possible) for a first chocolate layer (3) firstly to be applied, since in this case the bottom is sealed by the package itself.

Once the bottom layer (3) has firmed up, a following (second) chocolate layer is applied. Again, this can be white chocolate, milk chocolate, chocolate fondant or imitation chocolate. However, usually, and as shown in Fig. 1c, the second layer (4) is a combination of chocolate (milk chocolate, white chocolate, chocolate fondant or imitation chocolate) with a suitable filling (6). The filling (6) is usually a mixture of various ingredients which are known and used as standard in the baking, patisserie and chocolate sectors. Examples of possible fillings (6) are: butter creams, liquid creams, pralinés, ganaches, marzipan products, fruit fillings, caramel fillings, truffles, yoghurt fillings and the like. The listed products (ingredients) may or may not contain added sugars and can also contain non-everyday ingredients such as spices, for example.

The steps described hereinbefore can be repeated a number of times (see Fig. 1d and Fig. le); this is carried out above all in order to emphasize the visual aspect or to combine various flavours in one and the same chocolate product.

Finally, as shown in Fig. 1f, a cover layer (5) can be applied. This cover layer (5) is also a chocolate layer (milk chocolate, white chocolate, chocolate fondant or imitation chocolate). Mixtures of the above-mentioned chocolate products with other ingredients are also possible.

Optionally, a decoration layer and/or a decoration element (7) can be provided on the sealing cover layer (5), as shown in Fig. 1g. Possible decorations are also those used in the baking, patisserie and chocolate sectors. Examples of possible decoration layers and/or decoration elements are: sugar products, nuts (or nut products), spices, edible plants or flowers, imprints (edible ink-based pictures, letters, logos) applied to the cover layer (5) via a transfer process, for example, fruits (or fruit products). They can also be mixtures of various ingredients which are applied after mixing or preparation.

In accordance with the method, it is possible to form chocolate products which are built up layer-by-layer (see for example Fig. 1g); however, it is also possible to form circles, as it were, in the chocolate product by applying two different chocolate layers at the same time, for example. The filling of the consumption package (2) can utilize various processes such as one-shot or multiple-shot filling; other known filling processes are however also possible.

The method in accordance with the invention can be carried out both continuously and discontinuously, the consumption package (2) being filled by hand or via one or more filling devices. Using various filling devices allows a plurality of consumption packages (which may or may not be provided in the same holder) to be filled at the same time.

## Claims

1. Method for producing chocolate products (1) in an at least partially transparent consumption package (2) comprising a lip (8) which is suitable for opening the consumption package (2), **characterized in that** the method includes the following steps:
a) supplying the consumption package (2) which is open at both the top and the bottom, in a plate-shaped holder comprising a number of receptacles which are positioned next to one another and in each of which a consumption package (2) can be placed,
b) filling the supplied consumption package with a first chocolate layer (3);
c) applying a following chocolate layer (4, 5).

2. Method according to Claim 1, **characterized in that** steps b and c are repeated as many times as necessary to obtain a desired multilayered chocolate product (1).

3. Method according to Claim 1 or 2, **characterized in that** a filling (6) is applied between two chocolate layers (3 and 4).

4. Method according to one of Claims 1 to 3 inclusive, **characterized in that** the last applied chocolate layer forms a cover layer (5).

5. Method according to Claim 4, **characterized in that** the cover layer (5) is provided with a decoration layer and/or decoration element (7).

6. Method according to Claim 1, **characterized in that** the first and following chocolate layers are applied at the same time.

## Patentansprüche

1. Verfahren zum Erzeugen von Schokoladenerzeugnissen (1) in einer wenigstens teilweise transparenten Verbrauchsverpackung (2), die eine Lippe (8) umfasst, die zum Öffnen der Verbrauchsverpackung (2) geeignet ist, **dadurch gekennzeichnet, dass** das Verfahren die folgenden Schritte einschließt:
a) das Zuführen der Verbrauchsverpackung (2), die sowohl am Oberteil als auch am Unterteil offen ist, in einer plattenförmigen Halterung, die eine Anzahl von Behältnissen umfasst, die nebeneinander angeordnet sind und in die jeweils eine Verbrauchsverpackung (2) platziert werden kann,
b) das Füllen der zugeführten Verbrauchsverpackung mit einer ersten Schokoladenschicht (3),
c) das Aufbringen einer folgenden Schokoladenschicht (4, 5).

2. Verfahren nach Anspruch 1, **dadurch gekennzeichnet, dass** die Schritte b und c so viele Male wiederholt werden, wie es notwendig ist, um ein gewünschtes mehrschichtiges Schokoladenerzeugnis (1) zu erlangen.

3. Verfahren nach Anspruch 1 oder 2, **dadurch gekennzeichnet, dass** eine Füllung (6) zwischen zwei Schokoladenschichten (3 und 4) aufgebracht wird.

4. Verfahren nach einem der Ansprüche 1 bis einschließlich 3, **dadurch gekennzeichnet, dass** die letzte aufgebrachte Schokoladenschicht eine Überzugsschicht (5) bildet.

5. Verfahren nach Anspruch 4, **dadurch gekennzeichnet, dass** die Überzugsschicht (5) mit einer Dekorationsschicht und/oder einem Dekorationselement (7) versehen ist.

6. Verfahren nach Anspruch 1, **dadurch gekennzeichnet, dass** die erste und die folgenden Schokoladenschichten zur gleichen Zeit aufgebracht werden.

## Revendications

1. Procédé de production de produits chocolatés (1) dans un conditionnement de consommation au moins en partie transparent (2) comprenant une lèvre (8) qui convient à l'ouverture du conditionnement de consommation (2), **caractérisé en ce que** le procédé comprend les étapes consistant à :
a) acheminer le conditionnement de consommation (2), qui est ouvert à la fois au-dessus et au fond, sur un support en forme de plaque comprenant un certain nombre de réceptacles qui sont positionnés l'un à côté de l'autre et dans chacun desquels un conditionnement de consommation (2) peut être placé,
b) remplir le conditionnement de consommation acheminé d'une première couche de chocolat (3) ; et
(c) appliquer une couche de chocolat suivante (4, 5).

2. Procédé selon la revendication 1, **caractérisé en ce que** les étapes b) et c) sont répétées autant que nécessaire pour obtenir un produit chocolaté multicouche souhaité (1).

3. Procédé selon la revendication 1 ou 2, **caractérisé en ce qu'**une garniture (6) est appliquée entre deux couches de chocolat (3 et 4).

4. Procédé selon l'une quelconque des revendications 1 à 3, **caractérisé en ce que** la dernière couche de chocolat appliquée forme une couche de couverture (5).

5. Procédé selon la revendication 4, **caractérisé en ce que** la couche de couverture (5) est pourvue d'une couche décorative et/ou d'un élément décoratif (7).

6. Procédé selon la revendication 1, **caractérisé en ce que** la première couche et la couche suivante sont appliquées en même temps.
